(19) Europäisches Patentamt
European Patent Office
Office européen des brevets

(11) **EP 2 491 175 B1**

(12) **FASCICULE DE BREVET EUROPEEN**

(45) Date de publication et mention de la délivrance du brevet:
**23.11.2016 Bulletin 2016/47**

(21) Numéro de dépôt: **10785485.3**

(22) Date de dépôt: **21.10.2010**

(51) Int Cl.:
*D04H 13/00* (2006.01)   *B29B 11/16* (2006.01)
*B29C 70/10* (2006.01)   *B32B 5/26* (2006.01)
*B29C 70/08* (2006.01)   *B32B 7/04* (2006.01)

(86) Numéro de dépôt international:
**PCT/FR2010/052248**

(87) Numéro de publication internationale:
**WO 2011/048340 (28.04.2011 Gazette 2011/17)**

(54) **EMPILEMENT MULTIAXIAL SOLIDARISÉ PAR DES SOUDURES PONCTUELLES RÉALISÉES GRACE À DES VOILES THERMOPLASTIQUES INTERCALAIRES**

STACK MULTIAXIAL BEFESTIGUNGSWEISE PUNKTSCHWEISSVERBINDUNGEN MITTELS THERMOPLASTISCHER WEBS EINSÄTZEN

STACK MULTIAXIAL FASTENED POINT WELDS MADE BY MEANS OF THERMOPLASTIC WEBS INSERTS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.10.2009 FR 0957452**

(43) Date de publication de la demande:
**29.08.2012 Bulletin 2012/35**

(73) Titulaire: **Hexcel Reinforcements**
**01120 Dagneux (FR)**

(72) Inventeurs:
• **BERAUD, Jean-Marc**
**F-38140 Rives (FR)**
• **THIEL, Jean-Benoît**
**F-38110 La Chapelle De La Tour (FR)**

(74) Mandataire: **Sarlin, Laure V.**
**Cabinet Beau de Loménie**
**51, avenue Jean-Jaurès**
**BP 7073**
**69301 Lyon Cedex 07 (FR)**

(56) Documents cités:
EP-A1- 1 175 998       EP-A1- 1 348 791
EP-A2- 1 473 132       WO-A1-2010/046609
US-A1- 2003 008 125

**Description**

La présente invention concerne le domaine technique des matériaux de renfort, adaptés à la constitution de pièces composites. Plus précisément, l'invention concerne un nouvel empilement multiaxial pour la réalisation de pièces composites, par injection ou infusion ultérieure de résine thermodurcissable, et son procédé de fabrication.

La fabrication de pièces ou d'articles composites, c'est-à-dire comprenant, d'une part, un ou plusieurs renforts ou nappes fibreuses et, d'autre part, une matrice principalement de type thermodurcissable (« résine ») et pouvant inclure des thermoplastiques, peut, par exemple, être réalisée par un procédé dit "direct" ou "LCM" (de l'anglais « Liquid Composite Moulding »). Un procédé direct est défini par le fait qu'un ou plusieurs renforts fibreux sont mis en oeuvre à l'état "sec" (c'est-à-dire sans la matrice finale), la résine ou matrice, étant mise en oeuvre séparément, par exemple par injection dans le moule contenant les renforts fibreux (procédé "RTM", de l'anglais « Resin Transfer Moulding »), par infusion au travers de l'épaisseur des renforts fibreux (procédé "LRI", de l'anglais «Liquid Resin Infusion » ou procédé "RFI", de l'anglais « Resin Film Infusion »), ou bien encore par enduction/imprégnation manuelle au rouleau ou au pinceau, sur chacune des couches unitaires de renfort fibreux, appliquées de manière successive sur la forme.

Pour les procédés RTM, LRI ou RFI, il faut en général tout d'abord fabriquer une préforme fibreuse de la forme de l'article fini désiré, puis imprégner cette préforme d'une résine. La résine est injectée ou infusée par différentiel de pressions en température, puis une fois que toute la quantité de résine nécessaire est contenue dans la préforme, l'ensemble est porté à une température plus élevée pour réaliser le cycle de polymérisation/réticulation et ainsi entraîner son durcissement.

Dans ces secteurs, un grand nombre de préformes sont réalisées à base de matériau de renfort, principalement en fibres de carbone, notamment du type unidirectionnel. La résine qui est ultérieurement associée, notamment par injection ou infusion, aux nappes unidirectionnelles de renfort, lors de la réalisation de la pièce, peut être une résine thermodurcissable, par exemple du type époxy. Pour permettre un écoulement correct au travers d'une préforme constituée d'un empilement de différentes couches de fibres de carbone, cette résine est, le plus souvent, très fluide. L'inconvénient majeur de ce type de résine est leur fragilité, après polymérisation/réticulation, ce qui entraîne une faible résistance à l'impact des pièces composites réalisées.

Afin de résoudre ce problème, il a été proposé dans les documents de l'art antérieur d'associer les couches unidirectionnelles de fibres de carbone à un voile de fibres thermoplastiques. De telles solutions sont notamment décrites dans les demandes de brevet ou les brevets EP1125728, US 628016, WO 2007/015706, WO 2006/121961 et US 6,503,856. L'ajout de ce voile permet d'améliorer les propriétés mécaniques au test de compression après impact (CAI), test utilisé de manière courante pour caractériser la résistance des structures à l'impact.

Par ailleurs, pour la réalisation de pièces composites, sont très souvent utilisés des empilements multiaxiaux comprenant des nappes unidirectionnelles s'étendant selon des directions différentes. Le plus souvent, ces nappes unidirectionnelles sont liées entre elles par couture ou tricotage.

La demande de brevet EP 1 473 132 quant à elle décrit un empilement multiaxial de nappes unidirectionnelles associées à des voiles, la liaison entre les nappes unidirectionnelles de cet empilement pouvant être réalisé grâce à des rouleaux chauffants, ce qui permet d'obtenir une soudure continue.

Le document EP 1 348 791 décrit une association de nappes de carbone unidirectionnelles dans lesquelles les fils sont orientés parallèlement les uns aux autres, la liaison entre les nappes étant réalisée grâce à des fils de liage en matière thermoplastique qui sont alignés et espacés les uns des autres.

Dans ce contexte, un des objectifs de la présente invention est de proposer un nouveau type d'empilement multiaxial qui permette de conduire à des pièces composites finales qui allient à la fois de bonnes propriétés mécaniques, et une absence de microfissuration observée dans le cas où des empilements cousus ou tricotés sont utilisés.

Un autre objectif de l'invention est de fournir un empilement multiaxial qui puisse être produit à un coût de revient intéressant.

Un autre objectif de l'invention est de fournir un empilement multiaxial qui présente une bonne drapabilité et manipulabilité.

Dans ce contexte, la présente invention propose un nouvel empilement de matériaux fibreux comprenant au moins deux nappes de fibres de carbone unidirectionnelles, s'étendant chacune dans des directions différentes, dans lequel chacune des nappes unidirectionnelles est liée sur au moins l'une de ses faces à un voile adjacent de fibres thermoplastiques, et dans lequel au moins un voile est présent entre deux nappes unidirectionnelles consécutives caractérisé en ce que la liaison entre chaque nappe unidirectionnelle et chaque voile qui lui est adjacent est assurée grâce au voile, par des soudures ponctuelles conduisant à une soudure globale discontinue et en ce que ces soudures ponctuelles assurent également la cohésion de l'empilement.

La présente invention a également pour objet un procédé de fabrication d'un empilement selon l'une des revendications précédentes, caractérisé en ce qu'il comprend les étapes suivantes :

a) disposer d'un empilement de matériaux fibreux comprenant au moins deux nappes de fibres de carbone unidirectionnelles, s'étendant chacune dans des directions différentes, dans lequel un voile de fibres thermoplastiques, est disposé sur au moins l'une des faces de chaque nappe unidirectionnelle, au moins un voile étant présent entre deux nappes unidirectionnelles consécutives,

b) réaliser des soudures ponctuelles conduisant à une soudure globale discontinue, par chauffage des voiles, de manière à réaliser la liaison de chaque nappe unidirectionnelle avec chaque voile qui lui est adjacent et assurer également la cohésion de l'empilement.

Selon un mode de mise en oeuvre du procédé, les nappes unidirectionnelles sont réalisées, en ligne, sans qu'une cohésion propre, avant leur liaison au voile, ne leur soit conférée.

Selon un autre mode de mise en oeuvre du procédé, pouvant être combiné au précédent, la liaison transversale, au niveau de chaque soudure ponctuelle, de l'ensemble des nappes et voiles constitutifs de l'empilement est réalisée simultanément.

Selon un autre mode de mise en oeuvre du procédé, pouvant être combiné à l'un et/ou l'autre des modes précédents, les soudures ponctuelles sont réalisées par thermocompression.

Selon un autre mode de mise en oeuvre du procédé, pouvant être combiné à l'un et/ou l'autre des modes précédents, les soudures ponctuelles sont réalisées en opérant des perforations sur toute l'épaisseur de l'empilement, chaque soudure ponctuelle étant, notamment, réalisée autour des perforations.

La description qui suit, en référence aux Figures annexées, permet de mieux comprendre l'invention.

La **Figure 1** est une vue schématique, en perspective partiellement arraché, d'un empilement conforme à l'exemple 1.

La **Figure 2** est une vue schématique de dessus d'un empilement conforme à l'invention dans lequel, dans le plan de l'empilement, les soudures ponctuelles sont des lignes discontinues.

La **Figure 3** est une photographie de dessus d'un empilement conforme à l'invention dans lequel, dans le plan de l'empilement, les soudures ponctuelles sont des lignes continues.

La **Figure 4A** est une vue schématique de dessus d'un empilement conforme à l'invention dans lequel, dans le plan de l'empilement, les soudures ponctuelles sont des points se présentant sous la forme de disques.

La **Figure 4B** est une vue schématique de dessus d'un empilement conforme à l'invention dans lequel, dans le plan de l'empilement, les soudures ponctuelles sont des points se présentant sous la forme d'anneaux.

La **Figure 5** est une autre vue schématique de dessus d'un empilement conforme à l'invention dans lequel, dans le plan de l'empilement, les soudures ponctuelles sont des lignes discontinues.

Les **Figure 6A et 6B** sont, chacune, une vue en perspective d'un exemple de moyen de perforation.

La **Figure 7** est une vue partielle d'un dispositif intégrant une série de moyens de perforation en ligne.

Les **Figures 8** et **9** présentent les données mécaniques obtenues pour l'empilement de l'exemple 1, par rapport à un empilement cousu correspondant (exemple comparatif).

Dans le cadre de l'invention, la liaison entre les différentes nappes unidirectionnelles constituant l'empilement est assurée grâce au caractère thermoplastique des voiles. Des soudures sont réalisées à chaud, grâce aux différents voiles : ceux intercalaires, nommés voiles internes, situés entre deux nappes unidirectionnelles consécutives et ceux ou celui situé(s) en périphérie et constituant une face externe de l'empilement, nommé(s) voile(s) externe(s). Dans le cadre de l'invention, on propose un empilement multiaxial solidarisé par des soudures ponctuelles obtenues grâce au caractère thermoplastique des voiles intercalaires et du ou des voiles externes. En particulier, la liaison entre les différentes nappes unidirectionnelles (UD) et voiles n'est pas assurée par une couture, ni par un tricotage, ce qui présente les avantages ci-dessus mentionnés.

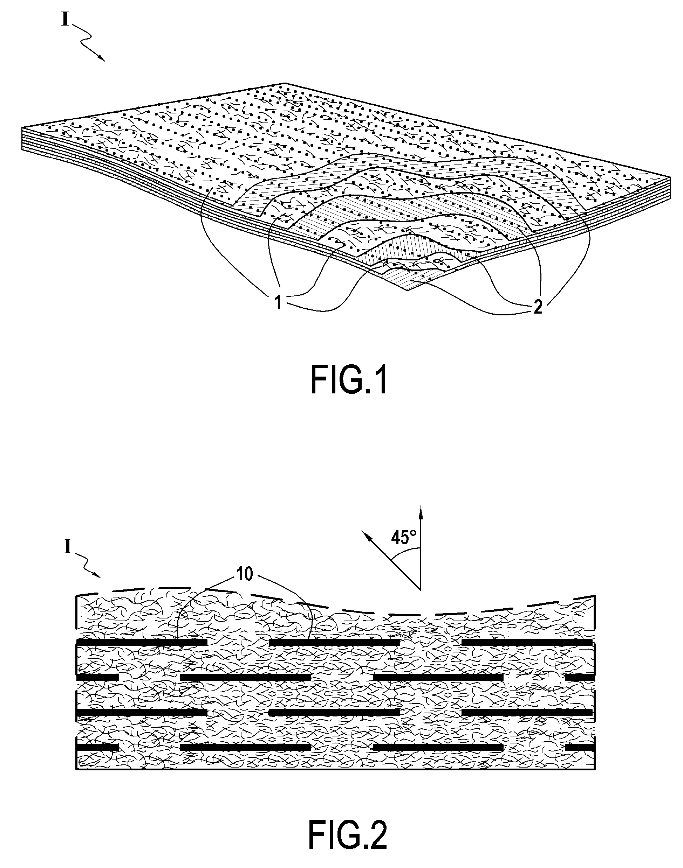

Au sein de l'empilement selon l'invention, il est essentiel qu'au moins un voile soit présent entre deux nappes unidirectionnelles consécutives, pour assurer la cohésion de l'ensemble. De manière avantageuse, l'empilement selon l'invention est constitué exclusivement de nappes unidirectionnelles de fibres de carbone et de voiles de fibres thermoplastiques. Il est possible de positionner deux voiles, voir plus, entre deux nappes unidirectionnelles consécutives. Mais, selon un mode de réalisation préféré de l'invention illustré **Figure 1,** un seul voile **1** est situé entre deux nappes **2** de fibres de carbone unidirectionnelles consécutives, au sein de l'empilement **I.** Selon un mode de mise en oeuvre de l'invention qui correspond à celui de la **Figure 1,** l'empilement correspond à un enchainement (voile/UD)$^n$, UD désignant une nappe unidirectionnelle et n désignant un nombre entier et tous les voiles présents au sein de l'empilement sont de grammage identique. Selon un mode de mise en oeuvre de invention non représenté, l'empilement correspond à un enchainement (voile/UD)$^n$/voile, UD désignant une nappe unidirectionnelle et n désignant un nombre entier, les voiles externes ayant un grammage égal au demi-grammage de chacun des voiles internes. Ces deux configurations permettent de pouvoir superposer différents empilement, tout en ayant le même grammage à chaque interpli. Dans tous les cas, le nombre entier n est fonction du nombre de plis présents dans l'empilement et sera, par exemple, compris dans la gamme allant de 2 à 32.

Dans le cadre de l'invention, par « nappe unidirectionnelle de fibres de carbone », on entend une nappe constituée exclusivement ou quasi-exclusivement de fibres de carbone déposées parallèlement les unes aux autres. Dans le cadre du procédé selon l'invention, les nappes de fibres de carbone unidirectionnelles peuvent être réalisées en ligne. Dans ce cas, les fils nécessaires à la constitution de la nappe sont alors dévidés de bobines et disposés, de manière à s'étendre parallèlement les uns aux autres, de façon jointive, sur un tapis convoyeur, éventuellement porteur d'un voile, lui-même superposé éventuellement avec un ou plusieurs enchaînements voile/ nappe unidirectionnelle. Aussi, selon un mode de réalisation de l'invention, chaque nappe de fibres de carbone unidirectionnelle ne présente aucune cohésion propre, avant d'être liée aux voiles de fibres thermoplastiques. Dans ce cas, les nappes unidirectionnelles sont directement formées sans cohésion intermédiaire et superposées dans des directions différentes, en intercalant les voiles nécessaires, notamment un voile unique entre deux nappes unidirectionnelle. Les machines classiques de constitution de multiaxiaux peuvent être utilisées. Les documents US 4,484,459, US 4,677,831, US 5,241,842 et US 6,276,174 notamment, auxquels on pourra se référer, décrivent de telles machines permettant la constitution de multiaxiaux. Dans le document US-A-4 484459, par exemple, chaque nappe unidirectionnelle est formée en faisant passer un fil autour de picots portés par deux chaînes sans fin parallèles, de sorte que les parties de fils s'étendant librement entre les picots soient parallèles entre elles. Des nappes unidirectionnelles sont formées en guidant les fils respectifs suivant des directions différentes et sont liées entre elles par couture. La technique décrite dans le document US 4,677,831 consiste à déplacer longitudinalement une nappe unidirectionnelle principale, parallèlement à la direction des éléments qui la composent, et à napper sur celle-ci des nappes transversales unidirectionnelles dont les directions font avec celle de la nappe principale (0°), des angles prédéterminés, par exemple +45° et -45° et/ou +60° et -60°. Les nappes transversales sont déposées par un processus de nappage entre deux chaînes à picots situées de chaque côté de la nappe principale. Bien entendu, quelque soit la technique utilisée pour déposer les nappes unidirectionnelles selon des directions différentes, les moyens de couture ou tricotage classiquement utilisés pour l'assemblage de l'empilement, seront remplacés, dans le cadre de l'invention par des moyens de soudure, permettant de réaliser la liaison souhaitée.

Il peut également être prévu que chaque nappe unidirectionnelle de fibres de carbone présente une cohésion propre, avant d'être liée aux voiles de fibres thermoplastiques. Cette cohésion peut, par exemple, être obtenue par aiguilletage, par la présence de fils de liage thermoplastiques venant croiser, sans entrelacement, les fibres de la nappe unidirectionnelle et assurant une liaison par collage, ou par la présence de fils de trame formant un tissu unidirectionnel. Il est, par exemple, possible d'utiliser une nappe unidirectionnelle commerciale dont la cohésion et la manipulabilité sera, par exemple, assurée par des fils de liage, selon une liaison mécanique par tissage, ou selon une liaison chimique du fait de la nature polymérique des fils de liage. Dans tous les cas (fabrication en ligne ou nappe présentant une cohésion propre), la nappe unidirectionnelle avant d'être solidarisée au(x) voile(s), offrira, de préférence, une couverture totale, avec un facteur d'ouverture de 0%. De telles nappes sont, par exemple, commercialisées par SIGMATEX UK Limited, Runcom Cheshire WA7 1TE, United Kingdom sous les références PW-BUD (ex : produit n°PC2780600 200GSM/PW-BUD/T700SC 12K 50C/0600mm), ou par la société OXEON AB, Suède, sous les références TEXERO.

Il peut donc être prévu la présence de fils de liage du type thermoplastique, notamment, en polyamides, copolyamides, polyesters, copolyesters, copolyamides block ester/éther, polyacétales, polyoléfines, polyuréthannes thermoplastiques, phénoxy, pour faciliter la manipulation, si besoin de la nappe, avant son association avec les voiles de fibres thermoplastiques. Ces fils de liage s'étendront le plus souvent transversalement aux fibres de carbone. Le terme « nappe unidirectionnelle » inclut aussi les tissus unidirectionnels, dans lesquels des fils de trame espacés viennent croiser avec entrelacement les fibres de carbone qui s'étendent parallèlement les unes aux autres et constituent les fils de chaine du tissu unidirectionnel. Même dans ces différents cas, où de tels fils de liage, de couture ou de trame sont présents, les fibres de carbone parallèles les unes aux autres représentent au moins 95% en masse de la nappe, qui est donc qualifiée d'« unidirectionnelle ». Néanmoins, selon un mode de réalisation particulier de l'invention, la nappe unidirectionnelle ne comporte aucun fil de trame venant entrelacer les fibres de carbone, de manière à éviter toute ondulation. En particulier, les nappes unidirectionnelles utilisées dans le cadre de l'invention sont ni tissées, ni cousues, ni tricotées. Dans chaque nappe unidirectionnelle, les fils de carbone sont, de préférence, non associés à un liant polymérique et donc qualifiés de secs, c'est-à-dire qu'ils ne sont ni imprégnés, ni enduits, ni associés à un quelconque liant polymérique avant leur association aux voiles thermoplastiques. Les fibres de carbone sont, néanmoins, le plus souvent caractérisées par un taux massique d'ensimage standard pouvant représenter au plus 2% de leur masse.

Un procédé pour la réalisation de nappes unidirectionnelles, tel que décrit dans le brevet EP 0972102 peut également être mis en oeuvre. Dans ce brevet, est décrit un procédé de réalisation d'une nappe fibreuse multiaxiale comprenant les étapes qui consistent à superposer plusieurs nappes unidirectionnelles dans des directions différentes, et lier les nappes superposées entre elles, dans lequel, pour réaliser au moins l'une des nappes unidirectionnelles, on étale au moins un câble de manière à obtenir une nappe d'épaisseur sensiblement uniforme, ayant une largeur au moins égale à 5 cm et une masse surfacique au plus égale à 300g/m2 et on confère à la nappe unidirectionnelle une cohésion lui permettant d'être manipulée préalablement à sa superposition avec au moins une autre nappe unidirectionnelle.

Selon un mode de réalisation particulier, chaque nappe unidirectionnelle de fibres de carbone présente une masse surfacique de 100 à 280 g/m$^2$. Cette gamme de grammage permet, de manière aisée, aux ingénieurs des bureaux d'étude de dimensionner correctement les structures composites en adaptant les séquences d'empilement des différentes couches, en fonction des différents modes de sollicitations mécaniques des structures composites. Un grammage de carbone d'une couche élémentaire plus faible offrira d'autant plus de versatilité dans le choix des différents empilements possibles à épaisseur constante.

Dans chaque nappe unidirectionnelle, les fibres de carbone, se trouvent le plus souvent sous la forme de fils d'au moins 1000 filaments, et notamment de 3000 à 50 000 filaments, par exemple de 3K, 6K, 12K ou 24K. Les fils de carbone ont un titre compris entre 60 et 3800 Tex, et préférentiellement entre 400 et 900 tex. Les épaisseurs de la nappe unidirectionnelle de carbone varient entre 90 et 270 $\mu$m.

Par « voile », on entend un non-tissé de fibres continues ou courtes. En particulier, les fibres constitutives du non-tissé présenteront des diamètres moyens compris dans la gamme allant de 0,5 et 70 $\mu$m. Dans le cas d'un non tissé de fibres courtes, les fibres présenteront, par exemple, une longueur comprise entre 1 et 100 mm.

Dans le cadre de l'invention, les fibres constitutives du voile sont, avantageusement, constituées d'un matériau thermoplastique, notamment choisi parmi les Polyamides (PA : PA6, PA12, PA11, PA6,6, PA 6,10, PA 6,12, ...), Copolyamides (CoPA), Polyamides - block ether ou ester (PEBAX, PEBA), polyphtalamide (PPA), Polyesters (Polyéthylène téréphtalate -PET-, Polybutylène téréphtalate - PBT-...), Copolyesters (CoPE), polyuréthanes thermoplastiques (TPU), polyacétales (POM...), Polyoléfines (PP, HDPE, LDPE, LLDPE....), Polyéthersulfones (PES), polysulfones (PSU...), les polyphénylènes sulfones (PPSU...), PolyétherétherCétones (PEEK), PolyétherCétoneCétone (PEKK), Poly(Sulfure de Phénylène) (PPS), ou Polyétherimides (PEI), polyimides thermoplastiques, polymères à cristaux liquides (LCP), phenoxys, copolymères à blocs tels que les copolymères Styrène-Butadiene-Méthylméthacrylate(SBM), copolymères Méthylméthacrylate -Acrylate de Butyl-Méthylméthacrylate (MAM) ou un mélange de fibres constituées de ces matériaux thermoplastiques.

L'épaisseur des voiles avant leur association à la nappe unidirectionnelle est très proche de leur épaisseur au sein de l'empilement consolidé. L'épaisseur des différents voiles avant association peut être déterminée par la norme NF EN ISO 9073-2 en utilisant la méthode A avec une aire d'essai de 2827 mm$^2$ (disque de 60 mm de diamètre) et une pression appliquée de 0,5 kPa. Au sein de l'empilement, chacun des voiles présente, par exemple, une épaisseur de 0,5 à 50 microns, de préférence de 3 à 35 microns. Une telle épaisseur contribue notamment à atteindre un taux volumiques de fibres élevés lorsque l'empilement est utilisé pour constituer une pièce composite, en particulier d'une épaisseur importante, par la technique d'infusion sous vide. Par ailleurs, à titre d'exemple, chacun des voiles a une masse surfacique comprise dans la gamme allant de 0,2 et 20 g/m$^2$. Pour des raisons de simplicité, il pourra être avantageux que tous les voiles présents au sein de l'empilement soient identiques, à l'exception des deux voiles externes dans le cas d'un empilement (voile/UD)$^n$/voile, qui présenteront un grammage égal au demi-grammage de chacun des voiles internes.

Dans l'empilement, au moins deux des nappes unidirectionnelles présentes sont disposées de manière à être orientées, selon deux directions différentes. L'empilement peut être qualifié de multiaxial. Toutes les nappes unidirectionnelles peuvent avoir des directions différentes ou seulement certaines d'entre elles, les autres pouvant avoir des directions identiques. Dans le cas où plusieurs nappes auront des directions identiques, il ne s'agira pas de deux nappes consécutives. Sinon, les nappes unidirectionnelles présenteront, de préférence des caractéristiques identiques. Les orientations privilégiées sont le plus souvent, celles faisant un angle de 0°, + 45° ou - 45°(correspondant également à +135°), et +90° avec l'axe principal de la pièce à réaliser. Le 0° correspond à l'axe de la machine permettant de réaliser l'empilement, c'est-à-dire à l'axe qui correspond à la direction d'avancement de l'empilement lors de sa conception. L'axe principal de la pièce qui est le plus grand axe de la pièce se confond généralement avec le 0°. Il est, par exemple, possible de réaliser des empilements quasi-isotropes, symétriques ou orientés en choisissant l'orientation des plis. A titre d'exemples d'empilement quasi-isotrope, on peut citer l'empilement selon les angles 45°/0°/135°/90°, ou 90°/135°/0°/45°. A titre d'exemples d'empilement symétrique, on peut citer 0°/90°/0°, ou 45°/135°/45°. En particulier, on pourra envisager l'assemblage de 2 à 32 plis, notamment de 16 à 24 plis. Les nombres de plis les plus couramment utilisés sont 8, 16, 24 et 32 plis, qui pourront, par exemple, être des multiples des empilements à 4 plis quasi-isotropes ci-dessus mentionnés.

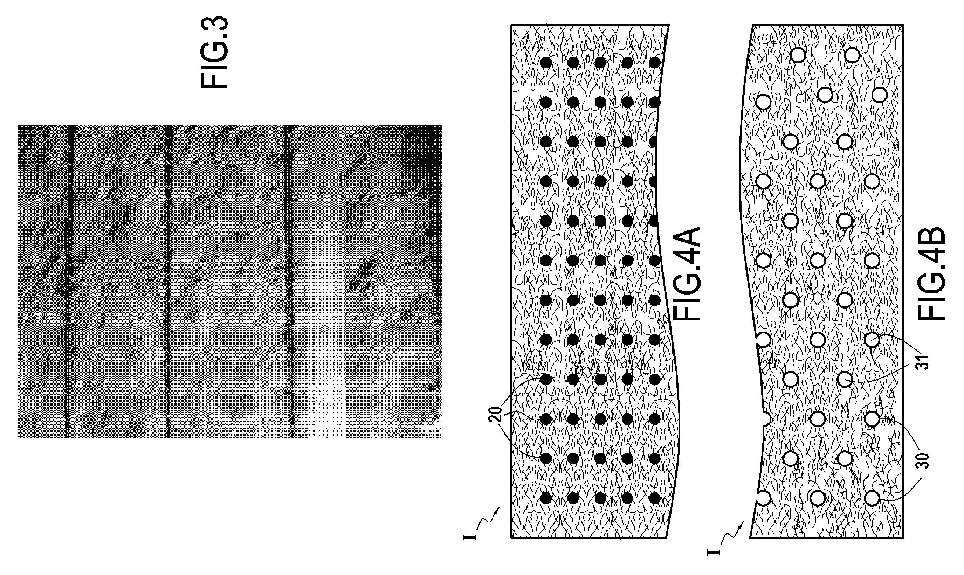

Dans le cadre de l'invention, l'empilement, c'est-à-dire l'ensemble des voiles et UD, n'est pas solidarisé par couture, ni par tricotage, mais par une soudure réalisée grâce au caractère thermoplastique des voiles présents au sein de l'empilement. Pour cela, une opération de chauffage/refroidissement est réalisée sur certaines zones seulement de la surface de l'empilement. Ce chauffage peut être réalisé classiquement par un moyen de chauffage à résistance ou encore grâce à des moyens ultrasons. Le chauffage entraine la fusion ou du moins le ramollissement des différents voiles. Une telle liaison utilisant le caractère thermoplastique des voiles est avantageuse car elle permet d'éviter tous les inconvénients que représentent la présence de fils de couture ou tricotage, tels que notamment les problèmes d'ondulation, de microfissuration, la baisse des propriétés mécaniques au niveau des pièces composites ultérieurement obtenues... La liaison mise en oeuvre correspond à un soudage discontinu, par opposition à un soudage continu obtenu par une thermocompression réalisée sur la totalité de la surface de l'empilement. Dans le cadre de l'invention, pour chaque nappe unidirectionnelle, la surface de l'ensemble des soudures ponctuelles représente, par exemple, de 0,1 à 40%, de préférence de 0,5 à 15% de la surface de la nappe unidirectionnelle. Une soudure discontinue présente un avantage en terme énergétique et également pour la drapabilité de l'empilement lors de la réalisation des pièces composites ultérieures. Des soudures ponctuelles conduisant à une soudure globale discontinue sont présentes. Le terme « ponctuel » est utilisé, dans le cadre de la description, pour désigner des soudures individuelles appartenant à un ensemble de soudures et inclut donc des soudures de différentes formes. Dans le plan de l'empilement c'est-à-dire parallèlement aux différents voiles et nappes unidirectionnelles, les soudures ponctuelles pourront notamment se présenter sous la forme de lignes discontinues **10** comme illustré **Figure 2** ou continues comme illustré **Figure 3,** c'est-à-dire s'étendant sur toute la largeur de la nappe unidirectionnelle, de points de différentes formes, notamment circulaires comme illustré **Figure 4A** sous la référence **20** ou de type prismes, anneaux comme illustré **Figure 4B** sous la référence **30** .... Ces soudures ponctuelles sont réparties sur la surface de l'empilement pour assurer sa cohésion et permettent d'assurer une liaison entre les nappes unidirectionnelles et les voiles sur toute l'épaisseur de l'empilement. Une telle liaison peut notamment être transversale. Des moyens de chauffage adaptés, par voie thermique ou encore ultrasonore, notamment sous la forme d'une ou plusieurs barres chauffantes dans le cas de lignes de liaison ou de poinçons chauffants dans le cas de points de liaison, dont la géométrie des points de contact avec l'empilement sera adaptée à la forme des liaisons ponctuelles souhaitées, pourront être utilisés. De tels moyens de chauffage pourront être portés à une température de 190 à 220°C et appuyés sur l'empilement avec une pression de 10 à 50 kPa, pendant par exemple de 0,1 à 2s, de préférence de 0,5 à 1s. Bien entendu, ces valeurs sont purement illustratives et dépendront notamment du nombre de plis et de la matière thermoplastique constitutive des voiles. Par exemple, des points de soudure peuvent être réalisés de façon régulière et sont, de préférence, répartis sur des droites s'étendant selon une ou deux directions, avec notamment un pas d'espacement situé dans la gamme allant de 4 à 50 mm et une distance entre deux droites parallèles située dans la gamme allant de 10 à 100 mm. Les soudures, d'une droite parallèle à l'autre, pourront être alignées comme illustré **Figure 4A** ou décalées, notamment d'un demi-pas comme illustré **Figure 4B,** qui illustre le cas où les points de soudure ont une forme d'anneau. De tels points de soudure pourront, par exemple, présenter une plus grande dimension, mesurée parallèlement à surface de l'empilement, située dans la gamme allant de 2 à 100 mm. La mise en oeuvre de points de soudure sera privilégiée, dans le cas où les nappes unidirectionnelles présenteront une cohésion propre avant leur association aux voiles. Dans le cas où les nappes unidirectionnelles ont une tenue préalablement à leur association aux voiles, pour chaque nappe unidirectionnelle, la surface de l'ensemble des soudures ponctuelles représente, par exemple, de 0,1 à 30%, de préférence de 0,5 à 5% de la surface de la nappe unidirectionnelle.

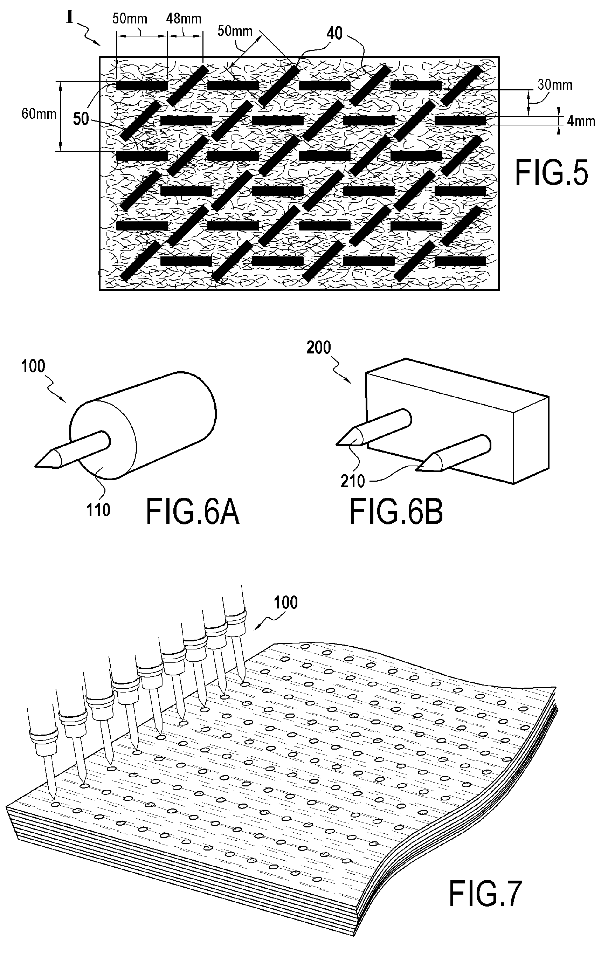

Si les nappes ne présentent pas une cohésion propre en amont de leur association avec les voiles, pour chaque nappe unidirectionnelle, les soudures ponctuelles zones représentent une surface globale correspondant de 1 à 40 %, de préférence de 5 à 15% de la surface totale de la nappe uniddirectionnelle. Dans ce cas, des soudures ponctuelles sous la forme de lignes seront, de préférence, utilisées car elles permettront plus facilement d'assurer la liaison de l'ensemble des fils des nappes unidirectionnelles et donner sa cohésion et sa manipulabilité à l'empilement. Selon un mode de réalisation, les soudures ponctuelles correspondent à des lignes de soudure continues parallèles les unes aux autres. Les lignes de soudure continues pourront, par exemple, être espacées, les unes des autres, de 10 à 50 mm. Selon un autre mode de réalisation, les soudures ponctuelles correspondent à des lignes de soudure discontinues. Les lignes de soudure discontinues présenteront, par exemple, une longueur de 10 à 100 mm. Les lignes de soudure discontinues pourront être réparties sur des droites parallèles, en étant décalées les unes par rapport aux autres d'une droite à l'autre, comme illustré **Figure 2.** Il est également possible de réaliser des lignes de soudures discontinues **40** et **50** s'étendant selon deux directions différentes comme illustré **Figure 5** sur laquelle les distances séparant les perforations sont purement illustratives et différentes variations pourront y être apportées, ces dernières étant mentionnées, car elles sont utilisées à l'exemple 2. Dans ce cas, la présence d'un décalage n'est pas toujours nécessaire, au sein d'une même série. Au sein d'une même série de lignes de soudure discontinues s'étendant selon la même direction, les lignes de soudures discontinues pourront, par exemple, être espacées, les unes des autres, de 5 à 50 mm. Quelque soit le type de lignes de soudure, continues ou discontinues, elles pourront, par exemple présenter une largeur de 20 à 200 mm. Toutes les dimensions données ci-dessus s'entendent bien entendu dans le plan de l'empilement, c'est-à-dire dans le plan de chacune des nappes unidirectionnelles.

Comme dit précédemment, de manière à assurer la liaison de l'ensemble des fils des nappes unidirectionnelles dans le cas où celles-ci ne présentent pas une cohésion propre préalable, les soudures pourront s'étendre selon des lignes continues sur toute la largeur du matériau intermédiaire, comme illustré **Figure 3.** La direction des lignes sera alors choisie de manière à s'étendre selon une direction parallèle avec aucune des orientations des nappes unidirectionnelles. Il est également possible de mettre en oeuvre des lignes discontinues comme illustré sur les **Figures 2** et **5** qui sont, chacune, une vue de dessus d'un empilement **I** conforme à l'invention sur lequel des lignes de soudure discontinues portant la référence **10,** sur la **Figure 2** et les références **40** et **50** sur la **Figure 5,** sont réalisées, de manière à ce que chaque fil de chacune des nappes unidirectionnelles présentes dans l'empilement rencontre régulièrement une soudure, par exemple au moins une soudure tous les 100 mm, de préférence au moins une soudure tous les 10 mm. Il est possible de réaliser les soudures **40** et **50** avec des barreaux chauffants distincts ou avec un moyen de soudage correspondant à une barre cannelée permettant d'effectuer en une opération de soudage deux lignes de soudure **40** et **50,** voire plus. Là encore, des directions pour les lignes de soudure discontinues non parallèles à toutes les directions des fibres des nappes unidirectionnelles, voire à certaines seulement dans le cas où plusieurs séries de lignes de soudure discontinues sont présentes, sont privilégiées. Bien entendu, ces différents modes de soudure utilisant des lignes de soudure continues ou discontinues peuvent également être utilisés lorsque les nappes unidirectionnelles présentent une cohésion propre préalable, dans ce cas, l'orientation des lignes de soudure a moins d'importance et celles-ci peuvent être plus espacées.

Il est possible de réaliser l'empilement en ajoutant, un à un, chaque pli et en assurant la liaison, après chaque ajout de pli. Il est cependant préféré de réaliser la liaison en une seule fois, ce qui présente un intérêt industriel certain. Pour cela, bien que les moyens de chauffage précédemment décrits soient parfaitement adaptés, on utilise, peut également utiliser, un moyen de chauffage qui va pénétrer au sein de l'empilement, et le traverser entièrement, afin d'opérer un chauffage direct sur tous les voiles au niveau de la zone de pénétration, et en particulier sur ceux qui sont situés au centre de l'empilement. Dans ce cas, de manière concomitante à la liaison des plis entre eux, il est opéré des perforations de l'empilement, permettant de créer des canaux de diffusion pour la résine, s'étendant dans l'épaisseur de l'empilement, le plus souvent, transversalement aux plis de l'empilement. Bien entendu, il est possible de réaliser une première liaison de l'empilement comme exposé ci-dessus, puis de réaliser ensuite une perforation, dans le but d'augmenter la perméabilité de l'empilement obtenu, mais pour des raisons de coût évidentes, il est préférable de réaliser simultanément les soudures et les perforations souhaitées. Dans tous les cas, il pourra être intéressant d'atteindre un facteur d'ouverture situé dans la gamme allant de 0,05 à 3%, de préférence entre 0,1 et 0,6 %, obtenu grâce à des perforations réalisées dans l'épaisseur de l'empilement. De tels facteurs d'ouverture permettent d'obtenir des perméabilités intéressantes comparables ou supérieures à celles obtenues avec les multiaxiaux cousus traditionnels. Les perforations présentes sur l'empilement ont, par exemple, une plus grande dimension, mesurée parallèlement à la surface des plis, située dans la gamme allant de 1 à 10mm. Selon de telles variantes de réalisation, il est ainsi possible d'atteindre une perméabilité transverse pour l'empilement, notamment, de $10^{-11}$ m$^2$ à $10^{-14}$ m$^2$, de préférence de $10^{-12}$ m$^2$ à $10^{-13}$ m$^2$ pour des TVF de 57 à 63% et notamment pour un TVF de 60%. Les perforations pourront être réalisées avec tout moyen de perforation adapté, par exemple du type aiguille, picot ou autre. Un chauffage est réalisé autour du moyen de perforation, de manière à obtenir la liaison souhaitée entre les plis, ce qui permet également de figer la perforation. Il se produit alors une fusion du voile autour du moyen de perforation qui après refroidissement conduit à une sorte d'oeillet autour de la perforation. Lors du retrait du moyen de perforation, le refroidissement est instantané, ce qui permet donc de figer la perforation obtenue. De préférence, le moyen de chauffage est directement intégré au moyen de perforation de telle sorte que le moyen de perforation est lui-même chauffé. Il est avantageux que le moyen de perforation **100** présente un épaulement **110** comme représenté **Figure 6A** sur lequel l'empilement pourra venir en butée, lors de la perforation, ce qui va permettre de resserrer les plis entre eux lors de la liaison. Cet épaulement est lui-même chauffé et permet de chauffer les voiles, tout en effectuant une pression sur l'ensemble à souder, et ce sur une zone plus importante entourant la perforation. Dans ce cas, les soudures ponctuelles peuvent être apparentées à des anneaux **30,** comme illustré schématiquement **Figure 4B,** qui viennent entourer chaque perforation **31**. La surface de l'épaulement **110** en contact avec l'empilement correspond, en fait, à la soudure réalisée. La **Figure 5B** montre un autre moyen de chauffage/perforation **200** utilisé dans le cas où les soudures se présentent sous la forme de lignes discontinues. Dans l'exemple illustré, une barre chauffante **200** permettant de réaliser des lignes de soudure discontinues est équipée de deux aiguilles **210** permettant de faire deux perforations par ligne discontinue. La pression exercée lors de la perforation s'apparente à celle décrite pour le chauffage seul et, appartient, par exemple, à la gamme 20 à 40kPa, et est notamment exercée pendant une durée de 1,1 à 2s, notamment de 0,5 à 1s. Cette pression est choisie de manière à conserver une épaisseur sensiblement constante, en tout point de l'empilement.

Il est possible de réaliser la perforation manuellement ou de préférence automatiquement grâce à des moyens de perforations alignés conformément aux lignes de perforation et pas d'espacement sélectionnés, comme par exemple illustré **Figure 6** dans le cas des moyens de perforation **100** illustrés **Figure 5A.**

Pour la réalisation des pièces composites, une résine ou matrice, de type thermodurcissable, sera, par la suite ajoutée, à l'empilement par exemple par injection dans le moule le contenant (procédé "RTM", de l'anglais Resin Transfer Moulding), ou par infusion (au travers de l'épaisseur des plis : procédé "LRI", de l'anglais Liquid Resin Infusion ou procédé "RFI", de l'anglais Resin Film Infusion). La matrice utilisée est, le plus souvent, de type thermodurcissable. La résine injectée sera, par exemple choisie parmi les polymères thermodurcissables suivants : les époxydes, les polyesters insaturés, les vinylesters, les phénoliques, les polyimides, les bismaléimides.

La pièce composite est ensuite obtenue après une étape de traitement thermique. En particulier, la pièce composite est obtenue généralement par un cycle de consolidation classique des polymères considérés, en effectuant un traitement thermique, recommandé par les fournisseurs de ces polymères, et connu de l'homme du métier. Cette étape de consolidation de la pièce souhaitée est réalisée par polymérisation/réticulation suivant un cycle défini en température et sous pression, suivie d'un refroidissement. La pression appliquée lors du cycle de traitement est faible dans le cas de l'infusion sous vide et plus forte dans le cas de l'injection dans un moule RTM. Selon une caractéristique avantageuse de l'invention, les pièces composites obtenues présentent un taux volumique de fibres de 57 à 63%, de préférence de 59 à 61% et ce même lorsqu'elles présentent une épaisseur importante, notamment supérieure à 10mm et/ou lorsqu'elles sont réalisées selon un procédé par injection sous une pression inférieure à la pression atmosphérique, notamment inférieure à 1bar et, de préférence comprise entre 0,1 et 1 bar. Ces taux volumiques de fibres sont compatibles avec l'utilisation des structures pour des pièces primaires, c'est-à-dire des pièces critiques en aéronautique qui reprennent les efforts mécaniques (fuselage, voilure...).

Le taux volumique de fibres (TVF) d'une pièce composite est calculé à partir de la mesure de l'épaisseur d'une pièce composite en connaissant la masse surfacique de la nappe unidirectionnelle de carbone et les propriétés de la fibre de carbone, à partir de l'équation suivante :

$$TVF(\%) = \frac{n_{plis} \times \text{Masse surfacique UD}_{carbone}}{\rho_{fibre\ carbone} \times e_{plaque}} \times 10^{-1} \qquad \textbf{(1)}$$

Où $e_{plaque}$ est l'épaisseur de la plaque en mm,
$\rho_{fibre\ carbone}$ est la densité de la fibre de carbone en g/cm$^3$,
la masse surfacique UD carbone est en g/m$^2$.

Les pièces composites obtenues présentent également des propriétés mécaniques optimales, et notamment la résistance à l'impact (CAI, Compression Après Impact), les propriétés mécaniques montrant la sensibilité aux trous tels que la compression trouée (OHC, Open Hole Compression en anglais), la traction trouée (OHT, Open Hole Traction en anglais), le matage (Bearing en anglais), le cisaillement dans le plan (IPS, In-Plane Shear en anglais). En particulier, il est possible d'obtenir des pièces composites présentant une contrainte à rupture en compression après impact (CAI), mesurée selon la norme européenne préliminaire prEN 6038 publiée par ASD-STAN (AeroSpace and Defence Standard, Avenue de Tervueren 270, 1150 Woluwe-Saint-Pierre, Belgique), supérieure à 200 MPa sous un impact de 25 J. Il a également été constaté, en particulier lorsque la matrice de résine est de type époxy, une faible chute de la Tg de l'époxy après vieillissement du même ordre de grandeur que celle obtenue pour les préimprégnés standards, connus de l'homme du métier.

Les exemples ci-dessous permettent d'illustrer l'invention, mais n'ont aucun caractère limitatif.

Dans le cadre de l'invention, les valeurs de perméabilité transverse sont obtenues avec la machine et la méthode de mesure décrites dans la Thèse intitulée « Problématique de la mesure de la perméabilité transverse de préformes fibreuses pour la fabrication de structures composites », par Romain Nunez, soutenue à l'Ecole Nationale Supérieure des Mines de Saint Etienne, le 16 Octobre 2009. La variation du TVF est obtenue par des variations successives de l'épaisseur de l'échantillon. Le fluide utilisé est de l'eau et la pression est de 1bar +/-0,01 bar.

Les facteurs d'ouverture peuvent être mesurés selon la méthode suivante. Le dispositif est constitué d'une caméra de marque SONY (modèle SSC-DC58AP), équipée d'un objectif de 10x, et d'une table lumineuse de marque Waldmann, modèle W LP3 NR,101381 230V 50HZ 2x15W. L'échantillon à mesurer est posé sur la tale lumineuse, la caméra est fixée sur une potence, et positionnée à 29cm de l'échantillon, puis la netteté est réglée.

La largeur de mesure est déterminée en fonction du matériau fibreux à analyser, à l'aide de la bague (zoom), et d'une règle : 10cm pour les matériaux fibreux ouverts (OF>2%), 1,17cm pour les matériaux fibreux peu ouverts (OF<2%).

A l'aide du diaphragme et d'un cliché témoin, la luminosité est réglée pour obtenir une valeur d'OF correspondant à celle donnée sur le cliché témoin.

Le logiciel de mesure par contraste Videomet, de la société Scion Image (Scion Corporation, USA), est utilisé. Après capture de l'image, celle-ci est traitée de la façon suivante : A l'aide d'un outil, on définit une surface maximum correspondant à l'étalonnage choisi, par exemple pour 10cm - 70 trous, et comportant un nombre de motifs entier. On sélectionne alors une surface élémentaire au sens textile du terme, c'est-à-dire une surface qui décrit la géométrie du matériau fibreux par répétition.

La lumière de la table lumineuse passant au travers des ouvertures du matériau fibreux, l'OF en pourcentage est défini par cent auquel est soustrait la surface noire divisée par la surface élémentaire soit 100-( surface noire / surface élémentaire).

Il est à noter que le réglage de la luminosité est important car des phénomènes de diffusion peuvent modifier la taille apparente des trous et donc de l'OF. Une luminosité intermédiaire sera retenue, de telle sorte qu'aucun phénomène de saturation ou de diffusion trop importante ne soit visible.

**Exemple 1 : Multiaxial quasi-isotrope soudé par ligne**

Un empilement suivant est réalisé en ligne sur une machine de fabrication de multiaxiaux : une nappe unidirectionnelle de fibres de carbone orientée à 45°, un voile, une nappe unidirectionnelle de fibres de carbone orientée à 135°, un voile.

Les nappes unidirectionnelles de fibres de carbone sont réalisées en ligne et leur grammage en fibres de carbone est estimé à 268 g/m$^2$ ± 3% à partir de fibres Hexcel HR dont les propriétés sont présentées **Tableau 1.**

**Tableau 1 :** Propriétés caractéristiques des fibres de carbone

|  | *Hexcel HR* |
|---|---|
| Contrainte à rupture (MPa) | 4830 |
| Module de traction (GPa) | 241 |
| Elongation (%) | 1,8 |
| Masse/ unité de longueur (g/m) | 0,785 |
| Masse volumique (g/cm$^3$) | 1,79 |
| Diamètre des filaments ($\mu$m) | 8 |

Des voiles de fibres courtes à base de polyamides sont utilisés.

Les caractéristiques des voiles utilisés sont indiquées dans le **Tableau 2.** Le point de fusion indiqué dans le **Tableau 2** est déterminé par calorimétrie différentielle à balayage (DSC) selon la norme ISO 11357-3. La masse surfacique est mesurée suivant la norme ISO 3801. Le taux de porosité indiqué dans le **Tableau 2** est calculé à partir de la formule suivante :

$$\text{Taux de porosité}_{\text{voile}} \ (\%) = 1 - \frac{\text{Masse surfacique du voile}}{\rho_{\text{matière du voile}} \ \text{x} \ e_{\text{voile}}} \text{x} 100 \qquad \textbf{(2)}$$

Où

- la masse surfacique du voile est exprimée en kg/m$^2$,
- $\rho_{\text{matière}}$ du voile est exprimée en kg/m$^3$,
- $e_{\text{voile}}$ est exprimée en m.

**Tableau 2 :** Caractéristiques des voiles utilisés (les valeurs mentionnées après ± représentent l'écart type)

| Caractéristiques des voiles |  |
|---|---|
| Point de fusion du voile (°C) | 178 |
| Masse surfacique (g/m$^2$) | 3,7±0,1 |
| Diamètre des filaments ($\mu$m) * | 13 ±3 |
| Epaisseur du voile ($\mu$m) | 69 ± 12 |
| Taux de porosité (%) calculé à partir de la formule (2) | 97 |
| * Mesurées par analyse d'images | |

Des lignes de soudure distantes de 50mm sont réalisées dans l'orientation 90° par rapport à l'axe de la machine. La soudure est effectuée par une barre chauffante en forme de V avec un rayon de courbure au niveau de l'appui de 4mm. La barre chauffante est portée à 200°C et une pression de 30 kPa est appliquée pendant 0,8s.

Cette barre est actionnée de telle sorte que la surface de contact vienne comprimer les plis de façon régulière, de manière à former des lignes de soudure comme illustré **Figure 3.**

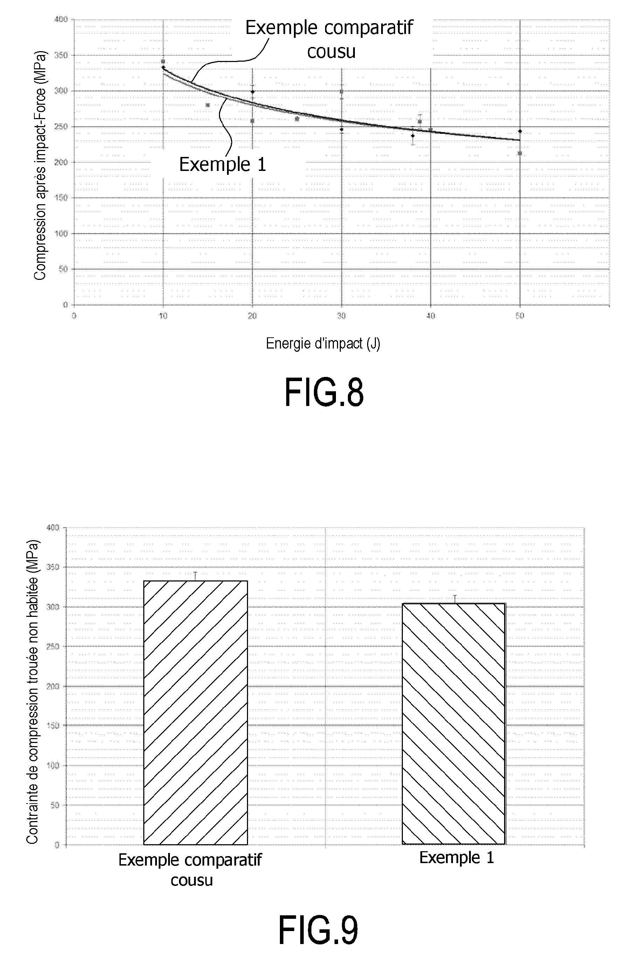

Les performances mécaniques de l'empilement selon l'invention sont comparées avec celles obtenues avec un même empilement qui ne diffère que par son mode de liaison : les soudures ont été remplacées par des points de chainettes 5*5mm réalisés avec un fil de 76 dTex (Polyamide). Les résultats sont présentés dans les **Tableaux 3** et **4** ci-après et sur les **Figures 8** et **9.**

## Tableau 3 : exemple comparatif cousu

| Exemple comparatif | | | | | |
| --- | --- | --- | --- | --- | --- |
| Propriétés | Méthode de test | Drapage | | Moyenne | Ecart type |
| Compression trouée non habitée - Contrainte [MPa] - pr EN 6036 type 1 + dim. 132x32 mm² + perçage 6,35 mm | pr EN 6036 type 1 dimensions éprouvettes : 132x32 mm² + perçage diam. 6,35 mm | [(45/135)/(0/90)]₂ₛ | | 331 | 14 |

| Propriétés | Méthode de test | Drapage | Energie d'impact (J) | Moyenne | Ecart type |
| --- | --- | --- | --- | --- | --- |
| Compression Après Impact - Contrainte - Normalisé à 60% TVF [MPa] | pr EN 6038 avec parcours d'énergie de 10 à 50 J | [(45/135)/(0/90)]₂ₛ | 10 | 333 | |
| | | | 20 | 299 | 9 |
| | | | 25 | 261 | |
| | | | 30 | 246 | 5 |
| | | | 38 | 237 | 13 |
| | | | 40 | 246 | |
| | | | 50 | 243 | |
| Profondeur d'indentation [mm] | pr EN 6038 avec parcours d'énergie de 10 à 50 J | [(45/135)/(0/90)]₂ₛ | 10 | 0,160 | |
| | | | 20 | 0,297 | 0,011 |
| | | | 25 | 0,580 | |
| | | | 30 | 0,762 | 0,058 |
| | | | 38 | 0,970 | 0,078 |
| | | | 40 | 1,288 | |
| | | | 50 | 1,313 | |
| Aire délaminée [cm²] | pr EN 6038 avec parcours d'énergie de 10 à 50 J | [(45/135)/(0/90)]₂ₛ | 10 | 1,46 | |
| | | | 20 | 3,05 | 0,33 |
| | | | 25 | 4,12 | |
| | | | 30 | 6,82 | 1,00 |
| | | | 38 | 6,52 | 0,66 |
| | | | 40 | 7,91 | |
| | | | 50 | 10,73 | |

## Tableau 4 : exemple 1

| Exemple 1 | | | | | |
| --- | --- | --- | --- | --- | --- |
| Propriétés | Méthode de test | Drapage | | Moyenne | Ecart type |
| Compression trouée non habitée - Contrainte [MPa] - pr EN 6036 type 1 + dim. 132x32 mm² + perçage 6,35 mm | pr EN 6036 type 1 dimensions éprouvettes : 132x32 mm² + perçage diam. 6,35 mm | [(45/135)/(0/90)]₂ₛ | | 305 | 10 |

| Propriétés | Méthode de test | Drapage | Energie d'impact (J) | Moyenne | Ecart type |
| --- | --- | --- | --- | --- | --- |
| Compression Après Impact - Contrainte Normalisé à 60% TVF [MPa] | pr EN 6038 avec parcours d'énergie de 10 à 50 J | [(45/135)/(0/90)]₂ₛ | 10 | 341 | |
| | | | 15 | 280 | |
| | | | 20 | 258 | |
| | | | 25 | 260 | |
| | | | 30 | 299 | 10 |
| | | | 38,8 | 257 | 10 |
| | | | 40 | 245 | |
| | | | 50 | 212 | |
| Profondeur d'indentation [mm] | pr EN 6038 avec parcours d'énergie de 10 à 50 J | [(45/135)/(0/90)]₂ₛ | 10 | 0,178 | |
| | | | 15 | 0,194 | |
| | | | 20 | 0,321 | |
| | | | 25 | 0,606 | |
| | | | 30 | 0,836 | 0,051 |
| | | | 38,8 | 1,051 | 0,061 |
| | | | 40 | 1,178 | |
| | | | 50 | 1,503 | |
| Aire délaminée [cm²] | pr EN 6038 avec parcours d'énergie de 10 à 50 J | [(45/135)/(0/90)]₂ₛ | 10 | 0,47 | |
| | | | 15 | 1,70 | |
| | | | 20 | 2,21 | |
| | | | 25 | 2,75 | |
| | | | 30 | 4,71 | 1,30 |
| | | | 38,8 | 5,87 | 0,91 |
| | | | 40 | 8,05 | |
| | | | 50 | 11,22 | |

**Exemple 2. Multiaxial quasi-isotrope soudé-perforé par points (4 plis)**

L'empilement tel qu'illustré **Figure 1** suivant est réalisé en ligne sur une machine de fabrication de multiaxiaux : une nappe unidirectionnelle de fibres de carbone orientée à 45°, un voile, une nappe unidirectionnelle de fibres de carbone orientée à 0°, un voile, une nappe unidirectionnelle de fibres de carbone orientée à 135°, un voile, une nappe unidirectionnelle de fibres de carbone orientée à 90° et un voile.

Les nappes unidirectionnelles de fibres de carbone sont réalisées en ligne et leur grammage en fibres de carbone est estimé à 194 g/m$^2$ ± 3% à partir de fibres Hexcel IM, dont les propriétés sont présentées **Tableau 5.**

Tableau 5 : Propriétés caractéristiques des fibres de carbone

| | Hexcel IM |
|---|---|
| Contrainte à rupture (MPa) | 5610 |
| Module de traction (GPa) | 297 |
| Elongation (%) | 1,9 |
| Masse/ unité de longueur (g/m) | 0,443 |
| Masse volumique (g/cm$^3$) | 1,80 |
| Diamètre des filaments ($\mu$m) | 5 |

Les voiles sont identiques à ceux utilisés à l'exemple 1.

Deux séries de lignes de soudure discontinues sont réalisées une série dans l'orientation 90° et une autre dans l'orientation 135° par rapport à l'axe de la machine, de manière à venir alterner chaque ligne de soudure orientée à 90° avec une ligne de soudure orientée à 135° comme représentée **Figure 5.** Pour cela une barre chauffante cannelée permettant d'effectuer en une opération un ensemble de soudures **40** et **50** est utilisé. Il est à noter qu'un léger recouvrement entre les lignes discontinues **50** d'une même ligne et entre deux lignes successives **40,** est effectué afin de s'assurer de la liaison de l'ensemble des fils déposés dans les 4 orientations citées précédemment.

Ce soudage peut idéalement être combiné avec de la perforation, en utilisant des moyens de chauffage/perforation tels qu'illustrés **Figure 6B.**

Tous ces exemples donnent des empilements qui sont aisément manipulables.

## Revendications

**1.** Empilement de matériaux fibreux comprenant au moins deux nappes de fibres de carbone unidirectionnelles, s'étendant chacune dans des directions différentes, dans lequel chacune des nappes unidirectionnelles est liée sur au moins l'une de ses faces à un voile adjacent de fibres thermoplastiques, au moins un voile étant présent entre deux nappes unidirectionnelles consécutives **caractérisé en ce que** la liaison entre chaque nappe unidirectionnelle et chaque voile qui lui est adjacent est assurée grâce au voile, par des soudures ponctuelles conduisant à une soudure globale discontinue et **en ce que** ces soudures ponctuelles assurent également la cohésion de l'empilement.

**2.** Empilement selon la revendication 1 **caractérisé en ce qu'**un seul voile est situé entre deux nappes de fibres de carbone unidirectionnelles consécutives.

**3.** Empilement selon la revendication 1 ou 2 **caractérisé en ce que** l'empilement correspond à un enchainement (voile/UD)$^n$, UD désignant une nappe unidirectionnelle et n désignant un nombre entier et tous les voiles présents au sein de l'empilement sont de grammage identique.

**4.** Empilement selon la revendication 1 ou 2 **caractérisé en ce que** l'empilement correspond à un enchainement (voile/UD)$^n$/voile, UD désignant une nappe unidirectionnelle et n désignant un nombre entier, les voiles externes ayant un grammage égal au demi-grammage de chacun des voiles internes.

**5.** Empilement selon l'une des revendications précédentes, **caractérisé en ce que** la liaison entre les différentes nappes unidirectionnelles et voiles n'est pas assurée par une couture, ni par un tricotage.

**6.** Empilement selon l'une des revendications précédentes, **caractérisé en ce que** les soudures ponctuelles correspondent à des lignes de soudure continues parallèles les unes aux autres.

7. Empilement selon la revendication 6, **caractérisé en ce que** les lignes de soudure ont des directions non parallèles avec l'une quelconque des nappes unidirectionnelles.

8. Empilement selon l'une des revendications 1 à 5, **caractérisé en ce que** les soudures ponctuelles correspondent à des lignes de soudure discontinues.

9. Empilement selon la revendication 8, **caractérisé en ce que** les lignes discontinues sont décalées les unes par rapport aux autres, de manière à ce que chaque fil rencontre régulièrement une soudure, par exemple au moins une soudure tous les 50 mm.

10. Empilement selon l'une des revendications 1 à 9, **caractérisé en ce que** chaque nappe de fibres de carbone unidirectionnelle ne présente aucune cohésion propre, avant d'être liée aux voiles de fibres thermoplastiques.

11. Empilement selon l'une des revendications 1 à 9, **caractérisé en ce que** chaque nappe de fibres de carbone unidirectionnelle présente une cohésion propre, avant d'être liée aux voiles de fibres thermoplastiques, cette cohésion étant obtenue par aiguilletage, par la présence de fils de liage thermoplastiques venant croiser, sans entrelacement, les fibres de la nappe unidirectionnelles et assurant une liaison par collage, ou par la présence de fils de trame formant un tissu unidirectionnel.

12. Empilement selon l'une des revendications précédentes, **caractérisé en ce que** chaque nappe unidirectionnelle de fibres de carbone présente une masse surfacique de 100 à 280 g/m$^2$.

13. Empilement selon l'une des revendications précédentes, **caractérisé en ce qu'**il présente un facteur d'ouverture de 0 %.

14. Empilement selon l'une des revendications 1 à 12, **caractérisé en ce qu'**il présente un facteur d'ouverture situé dans la gamme allant de 0,05 à 3%, de préférence entre 0,1 et 0,6 %, obtenu grâce à des perforations réalisées dans l'épaisseur de l'empilement.

15. Empilement selon l'une des revendications 1 à 12 ou 14, **caractérisé en ce qu'**il présente une perméabilité située dans la gamme de $10^{-11}$ à $14^{-14}$ m$^2$, de préférence dans la gamme de $10^{-12}$ à $10^{-13}$ m$^2$, pour un taux volumiques de fibres de 60%.

16. Empilement selon l'une des revendications précédentes **caractérisé en ce que** les fibres thermoplastiques des voiles sont choisies parmi les fibres de Polyamides (PA : PA6, PA12, PA11, PA6,6, PA 6,10, PA 6,12, ...), Copolyamides (CoPA), Polyamides - block ether ou ester (PEBAX, PEBA), polyphtalamide (PPA), Polyesters (Polyéthylène téréphtalate -PET-, Polybutylène téréphtalate - PBT-...), Copolyesters (CoPE), polyuréthanes thermoplastiques (TPU), polyacétales (POM...), Polyoléfines (PP, HDPE, LDPE, LLDPE....), Polyéthersulfones (PES), polysulfones (PSU...), les polyphénylènes sulfones (PPSU...), PolyétherétherCétones (PEEK), PolyétherCétoneCétone (PEKK), Poly(Sulfure de Phénylène) (PPS), ou Polyétherimides (PEI), polyimides thermoplastiques, polymères à cristaux liquides (LCP), phenoxys, copolymères à blocs tels que les copolymères Styrène-Butadiene-Méthylméthacrylate(SBM), copolymères Méthylméthacrylate -Acrylate de Butyl-Méthylméthacrylate (MAM) ou un mélange de fibres constituées de ces matériaux thermoplastiques.

17. Empilement selon l'une des revendications précédentes, **caractérisé en ce que** chacun des voiles a une masse surfacique comprise dans la gamme allant de 0,2 et 20 g/m$^2$.

18. Empilement selon l'une des revendications précédentes, **caractérisé en ce que** chacun des voiles présente une épaisseur de 0,5 à 50 microns, de préférence de 3 à 35 microns.

19. Procédé de fabrication d'un empilement selon l'une des revendications précédentes, **caractérisé en ce qu'**il comprend les étapes suivantes :

   a) disposer d'un empilement de matériaux fibreux comprenant au moins deux nappes de fibres de carbone unidirectionnelles, s'étendant chacune dans des directions différentes, dans lequel un voile de fibres thermoplastiques, est disposé sur au moins l'une des faces de chaque nappe unidirectionnelle, au moins un voile étant présent entre deux nappes unidirectionnelles consécutives,

b) réaliser des soudures ponctuelles conduisant à une soudure globale discontinue, par chauffage des voiles, de manière à réaliser la liaison de chaque nappe unidirectionnelle avec chaque voile qui lui est adjacent et assurer également la cohésion de l'empilement.

20. Procédé selon la revendication 19 **caractérisé en ce que** les nappes unidirectionnelles sont réalisées, en ligne, sans qu'une cohésion propre, avant leur liaison au voile, ne leur soit conférée.

21. Procédé selon la revendication 19 ou 20 **caractérisé en ce que** la liaison transversale, au niveau de chaque soudure ponctuelle, de l'ensemble des nappes et voiles constitutifs de l'empilement est réalisée simultanément.

22. Procédé selon l'une des revendications 19 à 21 **caractérisé en ce que** les soudures ponctuelles sont réalisées par thermocompression.

23. Procédé selon l'une des revendications 19 à 22 **caractérisé en ce que** les soudures ponctuelles sont réalisées en opérant des perforations sur toute l'épaisseur de l'empilement, chaque soudure ponctuelle étant réalisée autour des perforations.


**Patentansprüche**

1. Stapel aus Fasermaterialien, umfassend wenigstens zwei unidirektionale Kohlenstofffaserlagen, die sich jeweils in unterschiedlichen Richtungen erstrecken, wobei eine jede der unidirektionalen Lagen an wenigstens einer ihrer Seiten mit einem benachbarten Vlies aus thermoplastischen Fasern verbunden ist, wobei wenigstens ein Vlies zwischen zwei aufeinanderfolgenden unidirektionalen Lagen vorhanden ist, **dadurch gekennzeichnet, dass** die Verbindung zwischen jeder unidirektionalen Lage und jedem Vlies, das ihr benachbart ist, mit Hilfe des Vlieses durch Punktschweißungen, welche zu einer unterbrochenen Gesamtschweißnaht führen, sichergestellt ist und dass diese Punktschweißungen auch den Zusammenhalt des Stapels sicherstellen.

2. Stapel nach Anspruch 1, **dadurch gekennzeichnet, dass** sich ein einziges Vlies zwischen zwei aufeinanderfolgenden unidirektionalen Kohlenstofffaserlagen befindet.

3. Stapel nach Anspruch 1 oder 2, **dadurch gekennzeichnet, dass** der Stapel einer Verkettung $(Vlies/UD)^n$ entspricht, wobei UD eine unidirektionale Lage bezeichnet und n eine ganze Zahl bezeichnet, und alle innerhalb des Stapels vorhandenen Vliese ein gleiches Flächengewicht aufweisen.

4. Stapel nach Anspruch 1 oder 2, **dadurch gekennzeichnet, dass** der Stapel einer Verkettung $(Vlies/UD)^n/Vlies$ entspricht, wobei UD eine unidirektionale Lage bezeichnet und n eine ganze Zahl bezeichnet, wobei die äußeren Vliese ein Flächengewicht aufweisen, das gleich dem halben Flächengewicht eines jeden der inneren Vliese ist.

5. Stapel nach einem der vorhergehenden Ansprüche, **dadurch gekennzeichnet, dass** die Verbindung zwischen den verschiedenen unidirektionalen Lagen und Vliesen weder durch ein Nähen noch durch ein Stricken sichergestellt ist.

6. Stapel nach einem der vorhergehenden Ansprüche, **dadurch gekennzeichnet, dass** die Punkschweißungen parallel zueinander verlaufenden, durchgehenden Schweißnähten entsprechen.

7. Stapel nach Anspruch 6, **dadurch gekennzeichnet, dass** die Schweißnähte Richtungen aufweisen, die mit einer der unidirektionalen Lagen nicht parallel sind.

8. Stapel nach einem der Ansprüche 1 bis 5, **dadurch gekennzeichnet, dass** die Punktschweißungen unterbrochenen Schweißnähten entsprechen.

9. Stapel nach Anspruch 8, **dadurch gekennzeichnet, dass** die unterbrochenen Nähte zueinander versetzt sind, so dass jeder Faden regelmäßig auf eine Schweißnaht, beispielsweise alle 50 mm auf wenigstens eine Schweißnaht trifft.

10. Stapel nach einem der Ansprüche 1 bis 9, **dadurch gekennzeichnet, dass** jede unidirektionale Kohlenstofffaserlage keinerlei Eigenzusammenhalt aufweist, bevor sie mit den Vliesen aus thermoplastischen Fasern verbunden wird.

11. Stapel nach einem der Ansprüche 1 bis 9, **dadurch gekennzeichnet, dass** jede unidirektionale Kohlenstofffaserlage einen Eigenzusammenhalt aufweist, bevor sie mit den Vliesen aus thermoplastischen Fasern verbunden wird, wobei dieser Zusammenhalt durch Nadelung, durch das Vorliegen von thermoplastischen Bindefäden, welche die Fasern der unidirektionalen Lage kreuzen, ohne sie zu umschlingen, und eine Klebeverbindung sicherstellen, oder durch das Vorliegen von Schussfäden, die ein unidirektionales Gewebe bilden, erreicht wird.

12. Stapel nach einem der vorhergehenden Ansprüche, **dadurch gekennzeichnet, dass** jede unidirektionale Kohlenstofffaserlage eine flächenbezogene Masse von 100 bis 280 g/m$^2$ aufweist.

13. Stapel nach einem der vorhergehenden Ansprüche, **dadurch gekennzeichnet, dass** er einen Öffnungsfaktor von 0 % aufweist.

14. Stapel nach einem der Ansprüche 1 bis 12, **dadurch gekennzeichnet, dass** er einen Öffnungsfaktor im Bereich von 0,05 bis 3 %, vorzugsweise zwischen 0,1 und 0,6 % aufweist, der mit Hilfe von in der Dicke des Stapels ausgebildeten Perforierungen erreicht wird.

15. Stapel nach einem der Ansprüche 1 bis 12 oder 14, **dadurch gekennzeichnet, dass** der eine Durchlässigkeit im Bereich von 10$^{-11}$ bis 10$^{-14}$ m$^2$, vorzugweise im Bereich von 10$^{-12}$ bis 10$^{-13}$ mg, bei einem Faser-Volumenanteil von 60 % aufweist.

16. Stapel nach einem der vorhergehenden Ansprüche, **dadurch gekennzeichnet, dass** die thermoplastischen Fasern der Vliese aus den Fasern von Polyamiden (PA : PA6, PA12, PA11, PA6,6, PA 6,10, PA 6,12, ...), Copolyamiden (CoPA), Polyether- oder ester-Blockamiden (PEBAX, PEBA), Polyphthalamid (PPA), Polyestern (Polyethylenterephthalat -PET-, Polybutylenterephthalat - PBT-...), Copolyestern (CoPE), thermoplastischen Polyurethanen (TPU), Polyacetalen (POM...), Polyolefinen (PP, HDPE, LDPE, LLDPE...), Polyethersulfonen (PES), Polysulfonen (PSU...), Polyphenylensulfonen (PPSU...), Polyetheretherketonen (PEEK), Polyetherketonketon (PEKK), Polyphenylensulfid (PPS) oder Polyetherimiden (PEI), thermoplastischen Polyimiden, Flüssigkristallpolymeren (LCP), Phenoxys, Blockcopolymeren, wie Styrol-Butadien-Methylmethacrylat (SBM)-Copolymeren, Methylmethacrylat-Butylacrylat-Methylmethacrylat (MMA)-Copolymeren oder einer Mischung aus Fasern, die von diesen thermoplastischen Materialien gebildet sind, ausgewählt sind.

17. Stapel nach einem der vorhergehenden Ansprüche, **dadurch gekennzeichnet, dass** ein jedes der Vliese eine flächenbezogene Masse im Bereich von 0,2 bis 20 g/m$^2$ aufweist.

18. Stapel nach einem der vorhergehenden Ansprüche, **dadurch gekennzeichnet, dass** ein jedes der Vliese eine Dicke von 0,5 bis 50 Mikron, vorzugsweise von 3 bis 35 Mikron aufweist.

19. Verfahren zur Herstellung eines Stapels nach einem der vorhergehenden Ansprüche, **dadurch gekennzeichnet, dass** es die folgenden Schritte umfasst:

   a) Verfügen über einen Stapel aus Fasermaterialien, der wenigstens zwei unidirektionale Kohlenstofffaserlagen, die sich jeweils in unterschiedlichen Richtungen erstrecken, umfasst, wobei ein Vlies aus thermoplastischen Fasern an wenigstens einer der Seiten einer jeden unidirektionalen Lage angeordnet ist, wobei wenigstens ein Vlies zwischen zwei aufeinanderfolgenden unidirektionalen Lagen vorhanden ist,
   b) Herstellen von Punktschweißungen, die zu einer unterbrochenen Gesamtschweißnaht führen, durch Erhitzen der Vliese, um die Verbindung einer jeden unidirektionalen Lage mit jedem Vlies, das ihr benachbart ist, herzustellen und um auch den Zusammenhalt des Stapels sicherzustellen.

20. Verfahren nach Anspruch 19, **dadurch gekennzeichnet, dass** die unidirektionalen Lagen inline hergestellt werden, ohne dass ihnen ein Eigenzusammenhalt vor ihrem Verbinden mit dem Vlies verliehen wird.

21. Verfahren nach Anspruch 19 oder 20, **dadurch gekennzeichnet, dass** die Querverbindung im Bereich einer jeden Punktschweißung aller Lagen und Vliese, die den Stapel bilden, gleichzeitig hergestellt wird.

22. Verfahren nach einem der Ansprüche 19 bis 21, **dadurch gekennzeichnet, dass** die Punktschweißungen durch Thermokompression hergestellt werden.

23. Verfahren nach einem der Ansprüche 19 bis 22, **dadurch gekennzeichnet, dass** die Punktschweißungen dadurch hergestellt werden, dass über die gesamte Dicke des Stapels Lochungen vorgenommen werden, wobei jede Punktschweißung um die Lochungen herum hergestellt wird.

## Claims

1. A stack of fiber materials comprising at least two unidirectional layers of carbon fibers, each extending in different directions, wherein each of the unidirectional layers is bound on at least one of its faces to an adjacent web of thermoplastic fibers, at least one web being present between two consecutive unidirectional layers, **characterized in that** the connection between each unidirectional layer and each web which is adjacent to it is ensured by means of the web, by point-like welds leading to a discontinuous global weld and **in that** these point-like welds also ensure the cohesion of the stack.

2. The stack according to claim 1, **characterized in that** a single web is located between two consecutive unidirectional carbon fiber layers.

3. The stack according to claim 1 or 2, **characterized in that** the stack corresponds to a sequence $(web/UD)^n$, UD designating a unidirectional layer and n designating an integer and all the webs present inside the stack are of the same basis weight.

4. The stack according to claim 1 or 2, **characterized in that** the stack corresponds to a sequence $(web/UD)^n/web$, UD designating a unidirectional layer and n designating an integer, the external webs having a basis weight equal to a half basis weight of each of the internal webs.

5. The stack according to one of the preceding claims, **characterized in that** the connection between the different unidirectional layers and webs is neither ensured by a seam nor by a knit.

6. The stack according to one of the preceding claims, **characterized in that** the point-like welds correspond to continuous weld lines parallel to each other.

7. The stack according to claim 6, **characterized in that** the weld lines have directions which not parallel with any of the unidirectional layers.

8. The stack according to one of claims 1 to 5, **characterized in that** the point-like welds correspond to discontinuous weld lines.

9. The stack according to claim 8, **characterized in that** the discontinuous lines are shifted relatively to each other, so that each thread regularly encounters a weld, for example one weld every 50 mm.

10. The stack according to one of claims 1 to 9, **characterized in that** each unidirectional carbon fiber layer has no specific cohesion of its own, before being bound to the webs of thermoplastic fibers.

11. The stack according to one of claims 1 to 9, **characterized in that** each unidirectional carbon fiber layer has cohesion of its own, before being bound to the webs of thermoplastic fibers, this cohesion being obtained by needling, by the presence of thermoplastic binding threads which will cross, without any interlacing, the unidirectional fibers of the web and ensuring a connection by adhesive bonding, or by the presence of weft threads forming a unidirectional fabric.

12. The stack according to one of the preceding claims, **characterized in that** each unidirectional carbon fiber layer has a surface mass from 100 to 280 g/m$^2$.

13. The stack according to one of the preceding claims, **characterized in that** it has an openness factor of 0%.

14. The stack according to one of claims 1 to 12, **characterized in that** it has an openness factor located in the range from 0.05 to 3%, preferably between 0.1 and 0.6%, obtained by means of perforations made in the thickness of the stack.

15. The stack according to one of claims 1 to 12 or 14, **characterized in that** it has a permeability located in the range from $10^{-11}$ to $10^{-14}$ m$^2$, preferably in the range from $10^{-12}$ to $10^{-13}$ m$^2$, for a 60% volume ratio of fibers.

**16.** The stack according to one of the preceding claims, **characterized in that** the thermoplastic fibers of the webs are selected from fibers of polyamides (PA: PA6, PA12, PA11, PA6.6, PA6.10, PA6.12, ...), copolyamides (CoPA), poly-ether block or ester‑amides (PEBAX, PEBA), polyphthalamide (PPA), polyesters (polyethylene terephthalate -PET-, polybutylene terephthalate -PBT-), copolyesters (CoPE), thermoplastic polyurethanes (TPU), polyacetals (POM...), polyolefins (PP, HDPE, LDPE, LLDPE...), polyethersulfones (PES), polysulfones (PSU...), polyphenylene sulfones (PPSU...), polyetheretherketones (PEEK), polyetherketoneketones (PEKK), poly(phenylene sulfide) (PPS), or polyetherimides (PEI), thermoplastic polyimides, liquid crystal polymers (LCP), phenoxys, block copolymers such as styrene-butadiene-methylmethacrylate (SBM) copolymers, (butyl-methylmethacrylate acrylate)-methylmethacrylate (MAM) copolymers or a mixture of fibers consisting of these thermoplastic materials.

**17.** The stack according to one of the preceding claims, **characterized in that** each of the webs has a surface mass comprised in the range from 0.2 to 20 $g/m^2$.

**18.** The stack according to one of the preceding claims, **characterized in that** each of the webs has a thickness from 0.5 to 50 microns, preferably from 3 to 35 microns.

**19.** A method for manufacturing a stack according to one of the preceding claims, **characterized in that** it comprises the following steps:

a) having available a stack of fiber materials comprising at least two unidirectional carbon fiber layers, each extending in different directions, wherein a web of thermoplastic fibers is positioned on at least one of the faces of each unidirectional layer, at least one web being present between two consecutive unidirectional layers,
b) producing point-like welds leading to a global discontinuous weld, by heating the webs, so as to make the connection of each unidirectional layer with each web which is adjacent to it and to also ensure the cohesion of the stack.

**20.** The method according to claim 19, **characterized in that** the unidirectional layers are produced on line without giving them a cohesion of their own before their binding to the web.

**21.** The method according to claim 19 or 20, **characterized in that** the transverse connection, at each point-like weld, of the set of layers and webs making up the stack is made simultaneously.

**22.** The method according to one of claims 19 to 21, **characterized in that** the point-like welds are produced by thermocompression.

**23.** The method according to one of claims 19 to 22, **characterized in that** the point-like welds are produced by performing perforations on the whole thickness of the stack, each point-like weld being produced around the per-forations.

I

FIG.1

I

45°

10

FIG.2

FIG.3

FIG.4A

FIG.4B

FIG.5

FIG.6A

FIG.6B

FIG.7

FIG.8

FIG.9

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1125728 A
- US 628016 A
- WO 2007015706 A
- WO 2006121961 A
- US 6503856 B
- EP 1473132 A
- EP 1348791 A
- US 4484459 A
- US 4677831 A
- US 5241842 A
- US 6276174 B
- EP 0972102 A

**Littérature non-brevet citée dans la description**

- **ROMAIN NUNEZ.** Problématique de la mesure de la perméabilité transverse de préformes fibreuses pour la fabrication de structures composites. Ecole Nationale Supérieure des Mines de Saint Etienne, 16 Octobre 2009